# EUROPEAN PATENT APPLICATION

(11) **EP 2 897 370 A1**
(43) Date of publication of application: **22.07.2015**
(21) Application number: 14199071.3
(22) Date of filing: 18.12.2014
(51) Int. Cl.: H04N 21/422, H04N 21/443, H04N 21/485

(54) **Method and apparatus for operating television application**

(30) Priority: 17.01.2014 CN 201410023710
(71) Applicant: Xiaomi Inc., Beijing 100085 (CN)
(72) Inventor: Wang, Fa, 100085 BEIJING (CN); Li, Chuangqi, 100085 BEIJING (CN); Song, Yujie, 100085 BEIJING (CN)
(74) Representative: Delumeau, François Guy

(57) **Abstract**

A method and an apparatus for operating a television application are provided by the present disclosure, which belongs to the field of smart televisions. The method comprises: starting (101) an application editing mode of a television, and detecting whether a first icon displayed on the television is selected; when the first icon is selected, detecting (102) whether a designated key on a remote controller of the television is pressed down; and when the designated key on the remote controller of the television is pressed down, moving (103) the first icon, or adding a first application corresponding to the first icon into a folder. The apparatus comprises: a detection module and a processing module. Through the present disclosure, the number of times for pressing keys to operate television applications is reduced, and easiness is improved and thereby it is convenient for a user to operate.

## Description

### TECHNICAL FIELD

The present disclosure generally relates to the field of smart televisions, and particularly, to a method and an apparatus for operating a television application.

### BACKGROUND

A smart television is a television that has an operating system and can be installed with application software to realize extended functions. The smart television has a wider range of interactive television platform, may allow users to browse any website through the television and to use various applications, and may integrate functions of computers, digital televisions and Internet to realize diverse multimedia entertainment services.

With the development of smart televisions, the number of applications offered by the televisions is on the increase. Currently, most smart televisions need to be manipulated with remote controllers. For example, a smart television is manipulated to select an application requested by a user with a remote controller. However, when too many applications are installed in the television, due to inconvenience in operating with the remote controller, a user needs to press keys for many times to operate an application, and the operation is relatively complex and inconvenient.

### SUMMARY

The present disclosure provides a method and an apparatus for operating a television application. The technical solutions are as follows.

According to a first aspect, the invention relates of embodiments of the present disclosure, a method for operating a television application is provided. The method comprises :
starting an application editing mode of a television, and detecting whether a first icon displayed on the television is selected;
when the first icon is selected, detecting whether a designated key on a remote controller of the television is pressed down; and
when the designated key on the remote controller of the television is pressed down, moving the first icon, or adding a first application corresponding to the first icon into a folder.

In a particular embodiment, when the designated key on the remote controller of the television is pressed down, the step of moving the first icon, or the step of adding a first application corresponding to the first icon into a folder, comprise:
when a designated first key on the remote controller of the television is pressed down, moving the first icon to a position of an adjacent second icon, when the second icon is an indication of an application, packing the first application corresponding to the first icon and a second application corresponding to the second icon into a folder, and when the second icon is an indication of an folder, moving the first application corresponding to the first icon into the folder; and
when a designated second key on the remote controller of the television is pressed down, moving the first icon to a position of an adjacent third icon, and after a designated third key on the remote controller of the television is detected to be pressed down, exchanging a position of the first icon and the position of the third icon or packing the first application corresponding to the first icon and a third application corresponding to the third icon into a folder.

In a particular embodiment, when a designated first key on the remote controller of the television is pressed down, the step of moving the first icon to a position of an adjacent second icon, and when the second icon is an indication of an application, the step of packing the first application corresponding to the first icon and a second application corresponding to the second icon into a folder, comprise:
when a designated first direction key on the remote controller of the television is pressed down, moving the first icon to the position of the adjacent second icon in a direction corresponding to the first direction key, creating a folder, and packing the first application corresponding to the first icon and the second application corresponding to the second icon into the folder.

In a particular embodiment, when a designated second key on the remote controller of the television is pressed down, the step of moving the first icon to a position of an adjacent third icon, comprises:
when a designated second direction key on the remote controller of the television is pressed down, moving the first icon to the position of the adjacent third icon in a direction corresponding to the second direction key.

In a particular embodiment, the step of exchanging a position of the first icon and the position of the third icon, comprises:
when the third key is the second direction key, exchanging the position of the first icon and the position of the third icon.

In a particular embodiment, the step of packing the first application corresponding to the first icon and a third application corresponding to the third icon into a folder, comprises:
when the third key is a confirmation key, creating a folder, and packing the first application corresponding to the first icon and the third application corresponding to the third icon into the folder.

In a particular embodiment, the method further comprises:
after the folder is created, displaying the created folder in a size occupied by at least two icons.

In a particular embodiment, the method further comprises:
when a folder displayed on the television is selected, displaying a folder deleting indication on a screen of the television; and
when the folder deleting indication is detected to be selected, deleting the folder.

In a particular embodiment,the method further comprises:
when a folder displayed on the television is selected, displaying a folder moving indication on a screen of the television; and
when the folder moving indication is detected to be selected and a direction key on the remote controller of the television is detected to be pressed down, moving the folder in a direction corresponding to the direction key.

In a particular embodiment, the method further comprises:
when a folder displayed on the television is selected, displaying a folder entering indication on a screen of the television; and
when the folder entering indication is detected to be selected, displaying icons corresponding to respective applications in the folder as compressed in a form of longitudinally superimposed cards.

In a particular embodiment,after displaying icons corresponding to respective applications in the folder as compressed in a form of longitudinally superimposed cards, the method further comprises:
replacing the folder entering indication, and displaying an application moving indication on the screen of the television; and
after a fourth icon in the folder is detected to be selected and the application moving indication is detected to be selected, moving the fourth icon in a direction corresponding to a direction key on the remote controller of the television that is detected to be pressed down.

In a particular embodiment, after displaying icons corresponding to respective applications in the folder as compressed in a form of longitudinally superimposed cards, the method further comprises:
replacing the folder entering indication, and displaying an application deleting indication on the screen of the television; and
after a fifth icon in the folder is detected to be selected and the application deleting indication is detected to be selected, popping up a dialog box to inquire a user whether to perform an operation of deleting an application, and deleting an application corresponding to the fifth icon after a confirmation key on the remote controller of the television is detected to be pressed down.

According to a second aspect the invention relates to an apparatus for operating a television application is provided. The apparatus comprises:
a detection module configured to start an application editing mode of a television, and to detect whether a first icon displayed on the television is selected, and when the first icon is selected, to detect whether a designated key on a remote controller of the television is pressed down; and
a processing module configured to, when the designated key on the remote controller of the television is pressed down, move the first icon, or add a first application corresponding to the first icon to a folder.

In a particular embodiment, the processing module comprises:
a first processing sub module configured to, when a designated first key on the remote controller of the television is pressed down, move the first icon to a position of an adjacent second icon, when the second icon is an indication of an application, pack the first application corresponding to the first icon and a second application corresponding to the second icon into a folder, and when the second icon is an indication of an folder, move the first application corresponding to the first icon into the folder; and
a second processing sub module configured to, when a designated second key on the remote controller of the television is pressed down, move the first icon to a position of an adjacent third icon, and after a designated third key on the remote controller of the television is detected to be pressed down, exchange a position of the first icon and the position of the third icon or pack the first application corresponding to the first icon and a third application corresponding to the third icon into a folder.

In a particular embodiment, the first processing sub module comprises:
a first packing unit configured to, when a designated first direction key on the remote controller of the television is pressed down, move the first icon to the position of the adjacent second icon in a direction corresponding to the first direction key, create a folder, and pack the first application corresponding to the first icon and the second application corresponding to the second icon into the folder.

In a particular embodiment, the second processing sub module comprises:
a first moving unit configured to, when a designated second direction key on the remote controller of the television is pressed down, move the first icon to the position of the adjacent third icon in a direction corresponding to the second direction key.

In a particular embodiment, the second processing sub module comprises:
an exchange unit configured to, when the third key is the second direction key, exchange the position of the first icon and the position of the third icon.

In a particular embodiment, the second processing sub module comprises:
a second packing unit configured to, when the third key is a confirmation key, create a folder, and pack the first application corresponding to the first icon and the third application corresponding to the third icon into the folder.

In a particular embodiment, the apparatus further comprises:
a display module configured to, after the apparatus creates the folder, display the created folder in a size occupied by at least two icons.

In a particular embodiment, the display module is further configured to:
when a folder displayed on the television is selected, display a folder deleting indication on a screen of the television; and
the processing module further comprises:
a third processing sub module configured to, when the folder deleting indication is detected to be selected, delete the folder.

In a particular embodiment, the display module is further configured to:
when a folder displayed on the television is selected, display a folder moving indication on a screen of the television; and
the processing module further comprises:
a fourth processing sub module configured to, when the folder moving indication is detected to be selected and a direction key on the remote controller of the television is detected to be pressed down, move the folder in a direction corresponding to the direction key.

In a particular embodiment, the display module is further configured to:
when a folder displayed on the television is selected , display a folder entering indication on a screen of the television;
the processing module further comprises:
a fifth processing sub module configured to detect that the folder entering indication is selected; and
the display module is further configured to display icons corresponding to respective applications in the folder as compressed in a form of longitudinally superimposed cards.

In a particular embodiment, the display module is further configured to:
replace the folder entering indication, and display an application moving indication on the screen of the television; and
the fifth processing sub module comprises:
a second moving unit configured to, after a fourth icon in the folder is detected to be selected and the application moving indication is detected to be selected, move the fourth icon in a direction corresponding to a direction key on the remote controller of the television that is detected to be pressed down.

In a particular embodiment, the display module is further configured to:
replace the folder entering indication, and display an application deleting indication on the screen of the television; and
the fifth processing sub module comprises:
a deleting unit configured to, after a fifth icon in the folder is detected to be selected and the application deleting indication is detected to be selected, pop up a dialog box to inquire a user whether to perform an operation of deleting an application, and delete an application corresponding to the fifth icon after a confirmation key on the remote controller of the television is detected to be pressed down.

In one particular embodiment, the steps of the method for operating a television application are determined by computer program instructions.

Consequently, according to a fourth aspect, the invention is also directed to a computer program for executing the steps of a method for operating a television application as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Some advantageous effects brought by the technical solutions provided by the embodiments of the present disclosure may include: by starting an application editing mode of a television, whether a first icon displayed on the television is selected is detected; when the first icon is selected, whether a designated key on a remote controller of the television is pressed down is detected; and when the designated key on the remote controller of the television is pressed down, the first icon is moved, or a first application corresponding to the first icon is added to a folder. Thus, operations on the television applications, such as moving or packing into a folder and the like, are implemented based on a remote controller of a television. Further, the key operations are simplified and the number of times for pressing keys is reduced, and thus easiness and flexibility of operations are improved and it is convenient for a user to operate.
In particular, in the situation where there are too many applications installed in the TV, when the user wishes to use an application installed on the last page of the TV's interface, the user needs to press keys, for example <Right key> many times to reach the last page, and <Down key> or <Right key> to reach the desired application in the last page.
According to the invention, if the desired application is moved into a folder of the first page of the TV's interface, the user only needs to press keys to select the folder, and once the folder is entered, keys to reach the application. The number of keys actually pressed is thereby reduced by the invention.

It should be understood that, the above general description and the detailed description below are only illustrative but not for limiting the present disclosure.

### BRIEF DESCRIPTION OF THE DRAWINGS

In order to clearly explain the technical solutions in the embodiments of the present disclosure, hereinafter, the introduction to the drawings required to be used in the depiction of the embodiments will be given simply. It is apparent that the following drawings only illustrate some of the embodiments of the present disclosure, and one of ordinary skill in this art could obtain other drawings based on these drawings without inventive labor.
Fig. 1a is an exemplary flow chart showing a method for operating a television application provided by a first embodiment of the present disclosure;
Fig. 1b is an exemplary block diagram showing applications displayed on a television screen provided by the first embodiment of the present disclosure;
Fig. 1c is another exemplary flow chart showing a method for operating a television application provided by the first embodiment of the present disclosure;
Fig. 2a is an exemplary flow chart showing a method for operating a television application provided by a second embodiment of the present disclosure;
Figs. 2b (1)-(3) are exemplary block diagrams showing operations of packing television applications into a folder provided by the second embodiment of the present disclosure;
Figs. 2c (1)-(2) are exemplary block diagrams showing operations of exchanging positions of television applications provided by the second embodiment of the present disclosure;
Fig. 3a is an exemplary flow chart showing a method for operating a television application provided by a third embodiment of the present disclosure;
Fig. 3b is an exemplary block diagram showing an operation of packing television applications into a folder provided by the third embodiment of the present disclosure;
Fig. 3c is an exemplary block diagram in which an application editing mode is entered, provided by the third embodiment of the present disclosure;
Fig. 4a is an exemplary flow chart showing a method for operating a television application provided by a fourth embodiment of the present disclosure;
Fig. 4b is another exemplary flow chart showing a method for operating a television application provided by the fourth embodiment of the present disclosure;
Fig. 4c is a further exemplary flow chart showing a method for operating a television application provided by the fourth embodiment of the present disclosure;
Fig. 4d is a further exemplary flow chart showing a method for operating a television application provided by the fourth embodiment of the present disclosure;
Fig. 4e is an exemplary block diagram in which various indications are displayed after a folder is created, provided by the fourth embodiment of the present disclosure;
Fig. 5a is an exemplary block diagram showing an apparatus for operating a television application provided by a fifth embodiment of the present disclosure;
Fig. 5b is another exemplary block diagram showing an apparatus for operating a television application provided by the fifth embodiment of the present disclosure; and
Fig. 6 is a block diagram showing a device provided by a six embodiment of the present disclosure.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to one of ordinary skill in this art with reference to particular embodiments.

### DETAILED DESCRIPTION

Descriptions will now be made in detail to exemplary embodiments, examples of which are illustrated in the accompanying drawings. When accompanying figures are mentioned in the following descriptions, the same numbers in different drawings represent the same or similar elements, unless otherwise represented. The implementations set forth in the following description of exemplary embodiments do not represent all implementations consistent with the invention. Instead, they are merely examples of apparatus and methods consistent with aspects related to the disclosure as recited in the appended claims.

### First embodiment

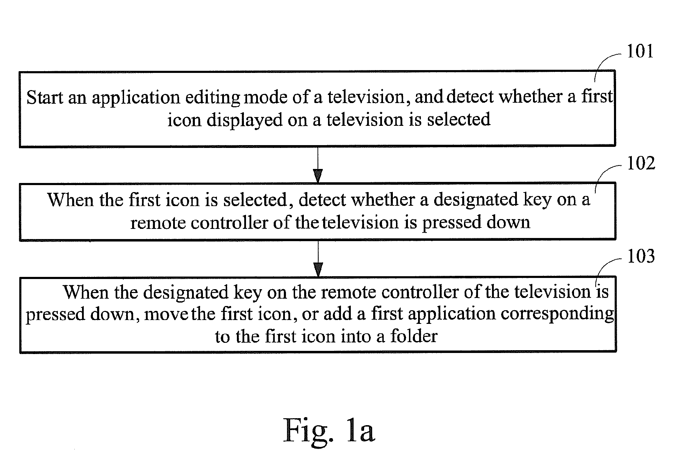

Referring to Fig. 1a, the present embodiment provides a method for operating a television application, and the method may be performed by entities including a television. The method includes the following steps.

In step 101, an application editing mode of a television is started, and whether a first icon displayed on the television is selected is detected.

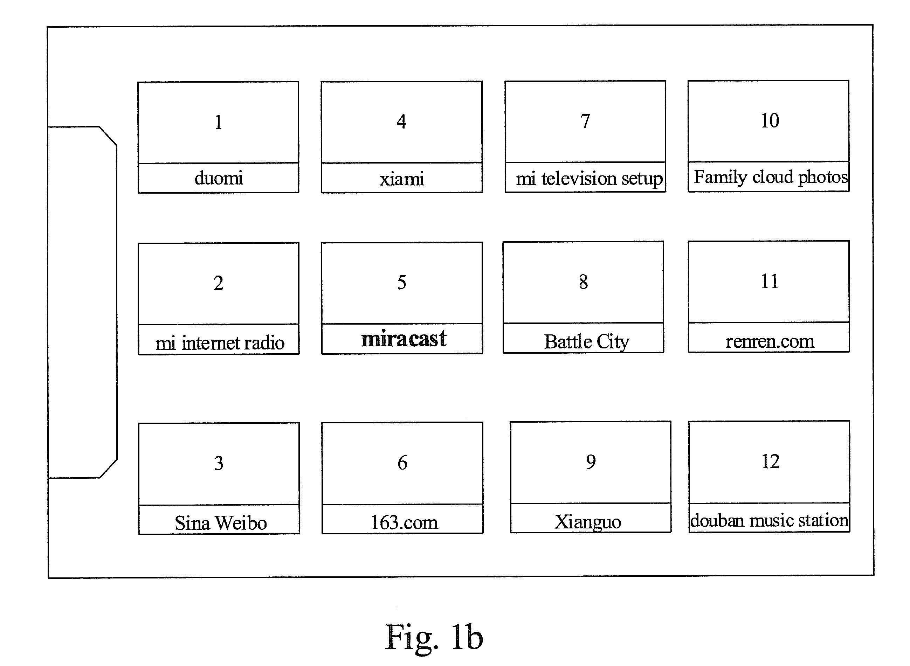

Usually, a plurality of icons are displayed on a television screen, and the present embodiment does not limit specific ways by which they are displayed. In one implementation, the icons may be arranged from left to right, and each longitudinal column contains a designated number of icons, such as two or three and the like. Referring to Fig. 1b, nine icons are displayed on the television, three icons are displayed in each longitudinal column and the columns are arranged from left to right.

In step 102, when the first icon is selected, whether a designated key on a remote controller of the television is pressed down is detected.

In step 103, when the designated key on the remote controller of the television is pressed down, the first icon is moved, or a first application corresponding to the first icon is added to a folder.

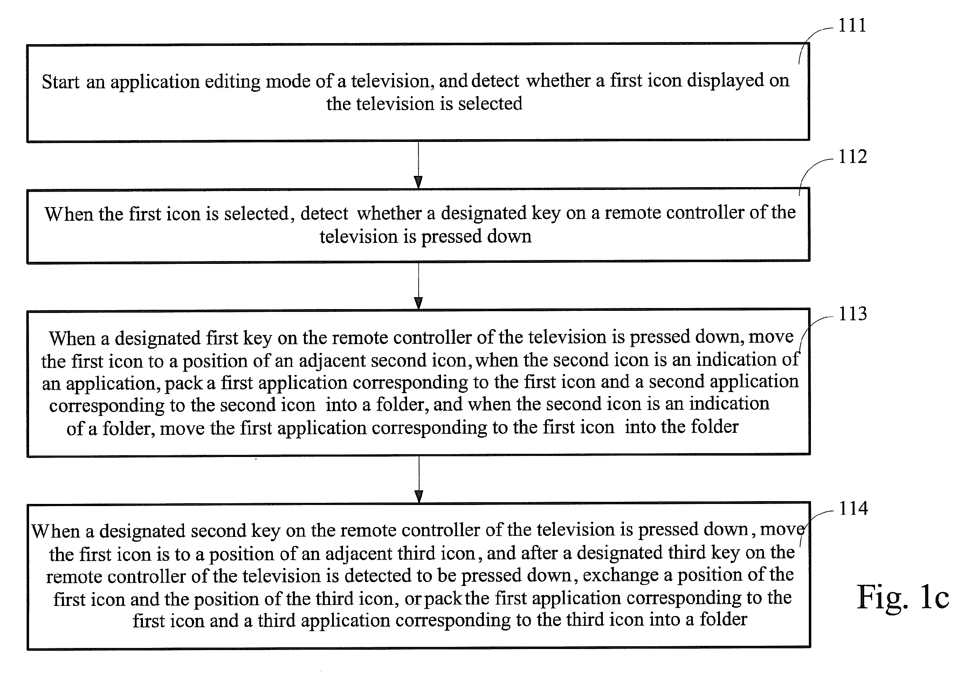

Referring to Fig. 1c, the embodiment further provides a method for operating a television application, which includes the following steps.

In step 111, an application editing mode of a television is started, and whether a first icon displayed on the television is selected is detected.

In step 112, when the first icon is selected, whether a designated key on a remote controller of the television is pressed down is detected.

In step 113, when a designated first key on the remote controller of the television is pressed down, the first icon is moved to a position of an adjacent second icon, when the second icon is an indication of an application, a first application corresponding to the first icon and a second application corresponding to the second icon are packed into a folder, and when the second icon is an indication of a folder, the first application corresponding to the first icon is moved into the folder.

In step 114, when a designated second key on the remote controller of the television is pressed down, the first icon is moved to a position of an adjacent third icon, and after a designated third key on the remote controller of the television is detected to be pressed down, a position of the first icon and the position of the third icon are exchanged, or the first application corresponding to the first icon and a third application corresponding to the third icon are packed into a folder.

When the designated key on the remote controller of the television is pressed down, moving the first icon, or adding the first application corresponding to the first icon to a folder, may include:
when a designated first key on the remote controller of the television is pressed down, moving the first icon to a position of an adjacent second icon, when the second icon is an indication of an application, packing the first application corresponding to the first icon and a second application corresponding to the second icon into a folder, and when the second icon is an indication of an folder, moving the first application corresponding to the first icon into the folder; and
when a designated second key on the remote controller of the television is pressed down, moving the first icon to a position of an adjacent third icon, and after a designated third key on the remote controller of the television is detected to be pressed down, exchanging a position of the first icon and the position of the third icon or packing the first application corresponding to the first icon and a third application corresponding to the third icon into a folder.

When a designated first key on the remote controller of the television is pressed down, moving the first icon to a position of an adjacent second icon, and when the second icon is an indication of an application, packing the first application corresponding to the first icon and a second application corresponding to the second icon into a folder, includes:
when a designated first direction key on the remote controller of the television is pressed down, moving the first icon to the position of the adjacent second icon in a direction corresponding to the first direction key, creating a folder, and packing the first application corresponding to the first icon and the second application corresponding to the second icon into the folder.

When a designated second key on the remote controller of the television is pressed down, moving the first icon to a position of an adjacent third icon, may include:
when a designated second direction key on the remote controller of the television is pressed down, moving the first icon to the position of the adjacent third icon in a direction corresponding to the second direction key.

Exchanging a position of the first icon and the position of the third icon, may include:
when the third key is the second direction key, exchanging the position of the first icon and the position of the third icon.

Packing the first application corresponding to the first icon and a third application corresponding to the third icon into a folder, may include:
when the third key is a confirmation key, creating a folder, and packing the first application corresponding to the first icon and the third application corresponding to the third icon into the folder.

The above method may further include: after the folder is created, displaying the created folder in a size occupied by at least two icons. The size occupied by at least two icons is a total size occupied by at least two icons displayed in a single longitudinal column on the television screen. For example, three icons are displayed in a single longitudinal column on the television screen, and a height of the folder may be a total height of two or three icons.

The above method may further include: when a folder displayed on the television is selected, displaying a folder deleting indication on a screen of the television; and when the folder deleting indication is detected to be selected, deleting the folder..

The above method may further include: when a folder displayed on the television is selected, displaying a folder moving indication on a screen of the television; and when the folder moving indication is detected to be selected and a direction key on the remote controller of the television is detected to be pressed down, moving the folder in a direction corresponding to the direction key..

The above method may further include: when a folder displayed on the television is selected, displaying a folder entering indication on a screen of the television; and when the folder entering indication is detected to be selected, displaying icons corresponding to respective applications in the folder as compressed in a form of longitudinally superimposed cards.

After displaying icons corresponding to respective applications in the folder as compressed in a form of longitudinally superimposed cards, the method may further include: replacing the folder entering indication, and displaying an application moving indication on the screen of the television; and after a fourth icon in the folder is detected to be selected and the application moving indication is detected to be selected, moving the fourth icon in a direction corresponding to a direction key on the remote controller of the television that is detected to be pressed down.

After displaying icons corresponding to respective applications in the folder as compressed in a form of longitudinally superimposed cards, the method may further include: replacing the folder entering indication, and displaying an application deleting indication on the screen of the television; and after a fifth icon in the folder is detected to be selected and the application deleting indication is detected to be selected, popping up a dialog box to inquire a user whether to perform an operation of deleting an application, and deleting an application corresponding to the fifth icon after a confirmation key on the remote controller of the television is detected to be pressed down.

In the above method, the application editing mode may be started by selecting a menu, and specific descriptions thereof are omitted.

The above method provided by the present embodiment may be applied in a television. The first application may be any one of applications installed in the television, and the present embodiment does not impose specific limitations on this.

In the above method provided by the present embodiment, by starting an application editing mode of a television, whether a first icon displayed on the television is selected is detected; when the first icon is selected, whether a designated key on a remote controller of the television is pressed down is detected; and when the designated key on the remote controller of the television is pressed down, the first icon is moved, or a first application corresponding to the first icon is added to a folder. Thus, operations on the television applications, such as moving or packing into a folder and the like, are implemented based on a remote controller of a television. Further, the key operations are simplified and the number of times for pressing keys is reduced, and thus easiness and flexibility of operations are improved and it is convenient for a user to operate.

### Second embodiment

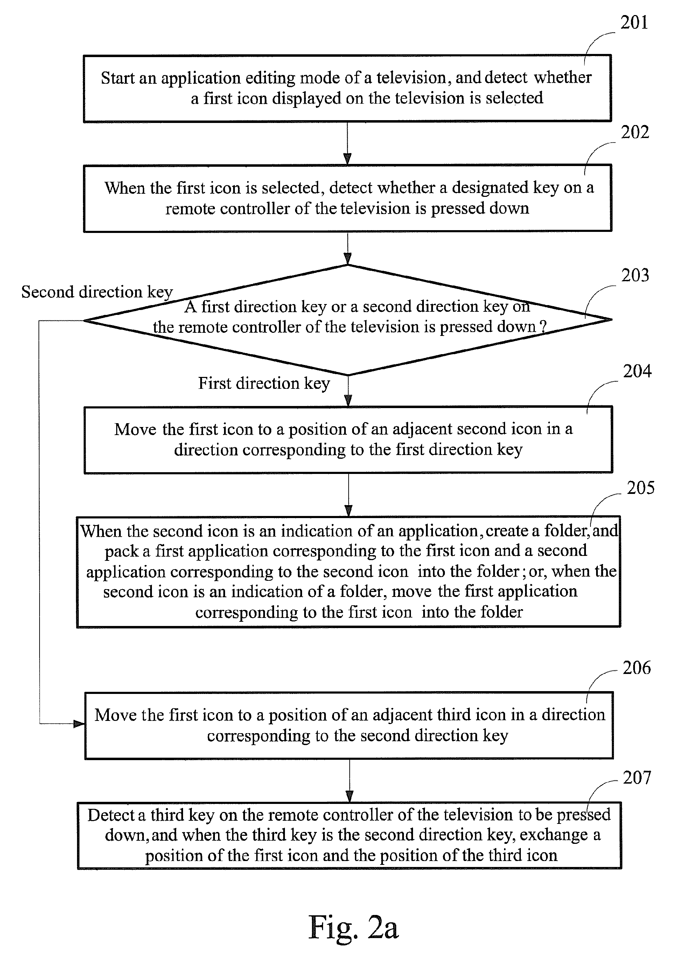

Referring to Fig. 2a, the present embodiment provides a method for operating a television application, in which adjacent applications are controlled to be packed or moved into a folder by a first direction key, and adjacent applications are controlled by a second direction key to perform position exchange or adjacent applications are controlled by a second direction key to be packed into a folder. The method includes the following steps.

In step 201, an application editing mode of a television is started, and whether a first icon displayed on the television is selected is detected.

In step 202, when the first icon is selected, whether a designated key on a remote controller of a television is pressed down is detected.

In the present embodiment, the first icon corresponds to a first application. The first application may be any one of applications installed in the television, and the present embodiment does not impose limitations on this here.

In step 203, whether the pressed key on the remote controller of the television is a first direction key or a second direction key is judged, if the first direction key is pressed down, step 204 is performed; and if the second direction key is pressed down, step 206 is performed.

In step 204, the first icon is moved to a position of an adjacent second icon in a direction corresponding to the first direction key.

In step 205, when the second icon is an indication of an application, a folder is created, and a first application corresponding to the first icon and a second application corresponding to the second icon are packed into the folder; or, when the second icon is an indication of a folder, the first application corresponding to the first icon is moved into the folder; and the process is ended.

When the first direction key is a left key or a right key, the first application may be controlled to be packed into the folder together with an adjacent second application on a left side or on a right side. Thus, the operations are simply, and the number of times for pressing keys are reduced, and thereby it is convenient for a user to operate.

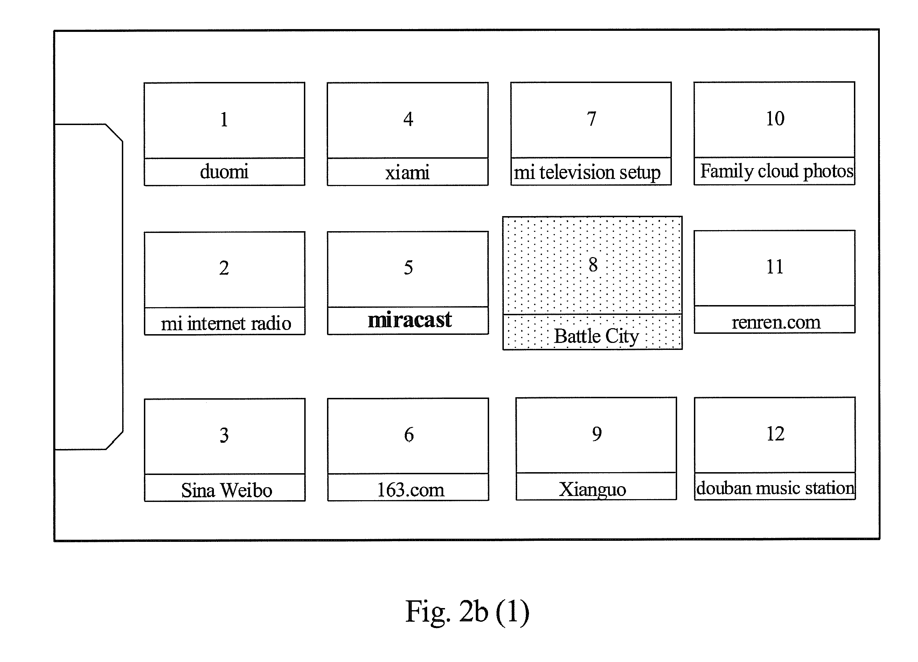

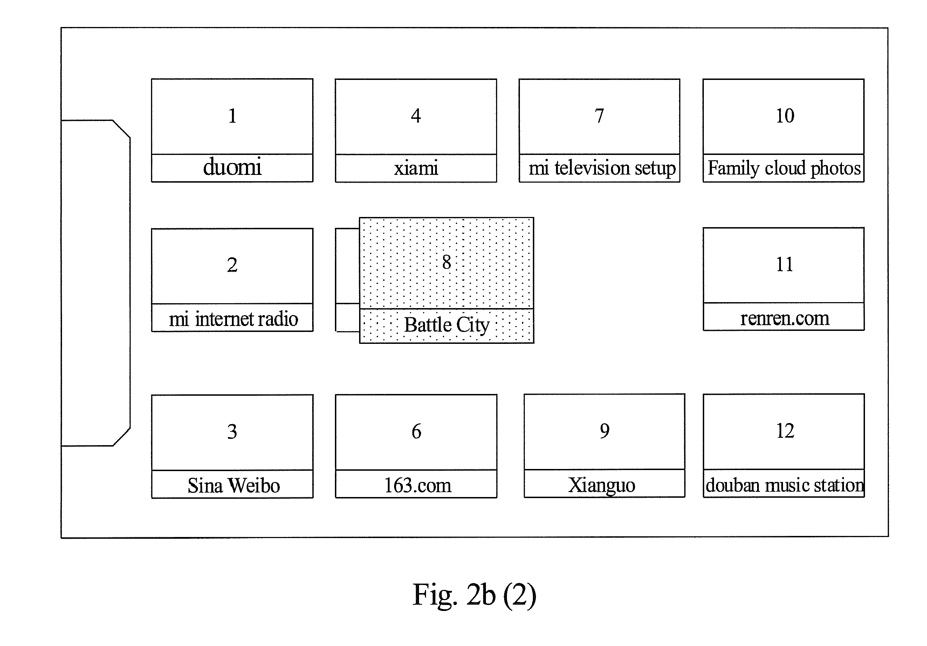

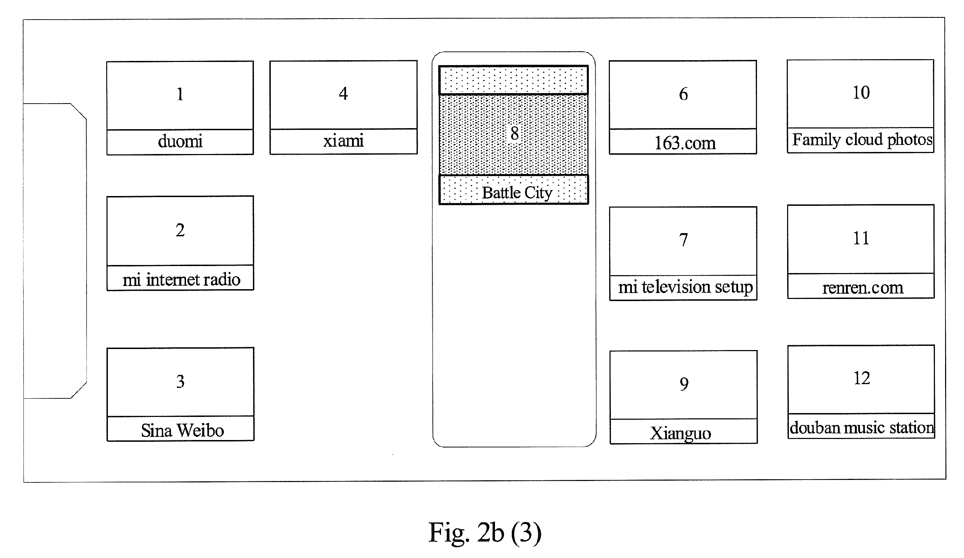

For example, referring to Fig. 2b, block diagrams of operations of packing television applications into a folder through a left key are shown. In Fig. 2b (1), an application 8 is firstly detected to be selected and then is displayed as highlighted. In Fig. 2b (2), after an application moving icon (not shown in this figure) displayed on the television screen is selected, a left key on the remote controller of the television is detected to be pressed down, the application 8 is moved left to a position of an adjacent application 5 on the left side, a folder is created, and the application 8 and the application 5 are packed into the folder. Since a height of the folder is a total height of the whole longitudinal column and the folder is behind an application 4, they are displayed as shown in Fig. 2b (3).

In step 206, the first icon is moved to a position of an adjacent third icon in a direction corresponding to the second direction key.

In step 207, a third key on the remote controller of the television is detected to be pressed down, and when the third key is the second direction key, a position of the first icon and the position of the third icon are exchanged, and the process is ended.

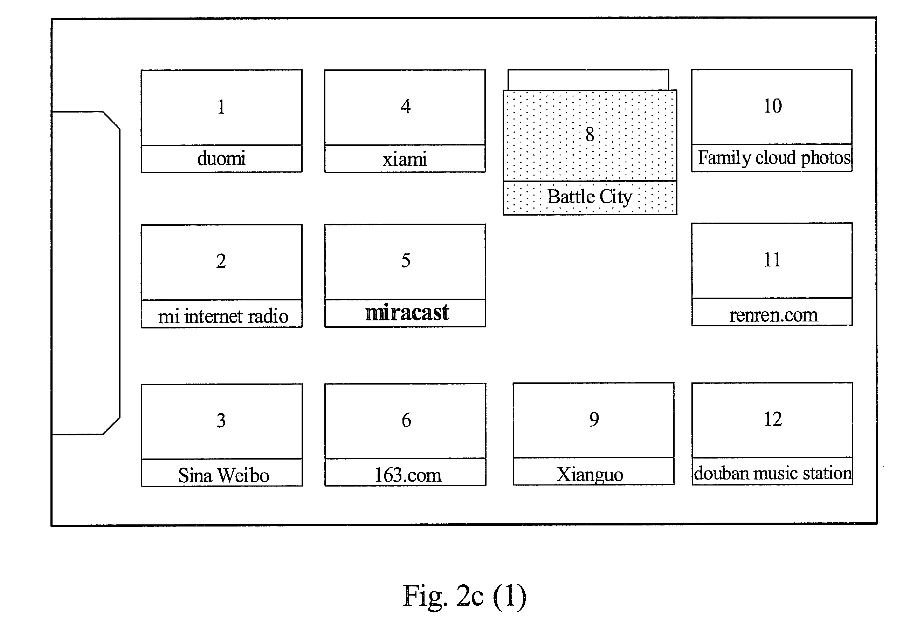

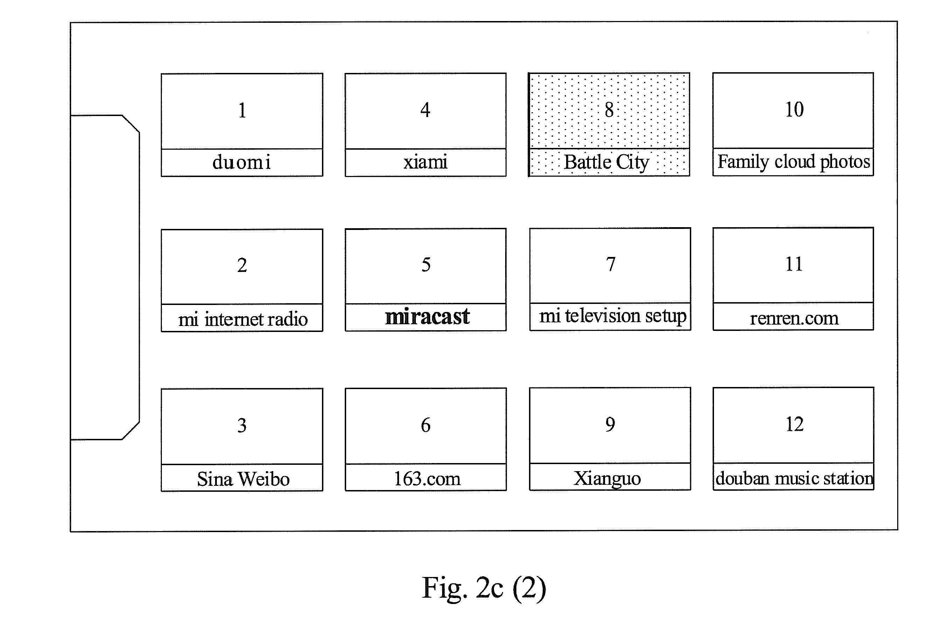

For example, referring to Fig. 2c, block diagrams of operations of exchanging positions of television applications through an up key are shown. In Fig. 2c (1), the application 8 is firstly detected to be selected, and after an application moving icon (not shown in the figure) displayed on the television screen is selected, an up key on the remote controller of the television is detected to be pressed down, and then the application 8 is moved upward to a position of an application 7. At this time, the two applications are displayed in a superimposed state. In Fig. 2c (2), the up key on the remote controller of the television is detected to be pressed down once again, and it is confirmed that the pressed key is the same as the previously pressed key, and then the positions of the application 8 and the application 7 are exchanged. At this time, the application 8 is displayed above the application 7.

In the present embodiment, the above method may further include:
after the folder is created, displaying the created folder in a size occupied by at least two icons.

In the present embodiment, one folder includes at least 2 applications therein. For example, it may include six to eight applications, and so on. The present embodiment does not impose limitations on this.

In the present embodiment, the application editing mode may be started by selecting a menu, and detailed descriptions thereof are omitted here.

The above method provided by the present embodiment may be applied in a television.

In the above method provided by the present embodiment, by starting an application editing mode of a television, detecting whether a first icon displayed on the television is selected; when the first icon is selected, whether a designated key on a remote controller of the television is pressed down is detected; and when the designated key on the remote controller of the television is pressed down, the first icon is moved, or a first application corresponding to the first icon is added to a folder. Thus, operations on the television applications, such as moving or packing into a folder and the like, are implemented based on a remote controller of a television. Further, the key operations are simplified and the number of times for pressing keys is reduced, and thus easiness and flexibility of operations are improved and it is convenient for a user to operate.

### Third embodiment

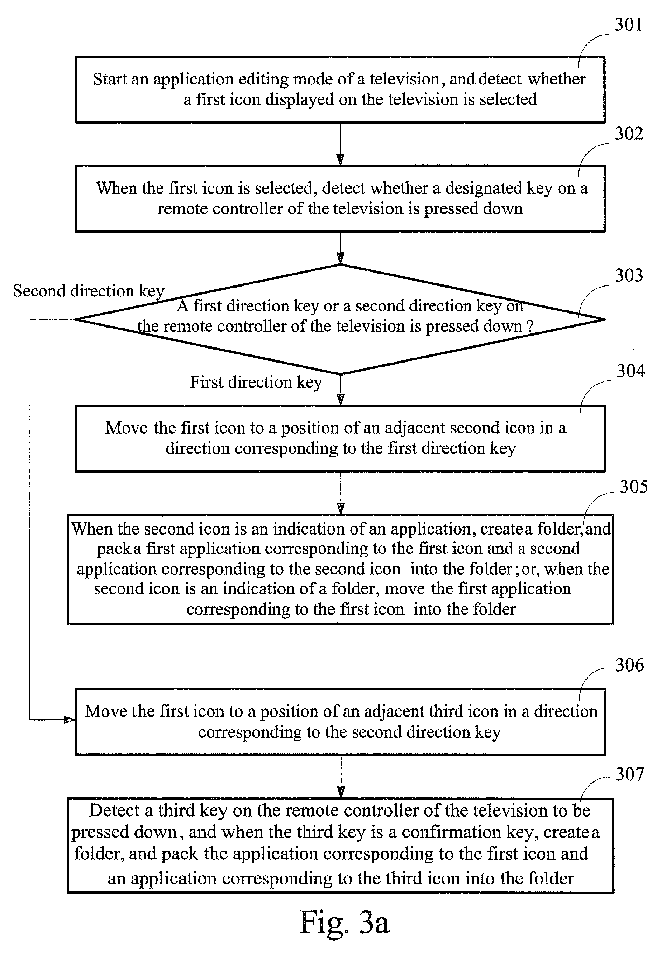

Referring to Fig. 3a, the present embodiment provides a method for operating a television application. This embodiment differs from the second embodiment in that: an adjacent application may be also controlled to be packed into a folder through a second direction key in combination with a confirmation key. The method includes the following steps.

In step 301, an application editing mode of a television is started, and whether a first icon displayed on the television is selected is detected.

In step 302, when the first icon is selected, whether a designated key on a remote controller of the television is pressed down is detected.

In step 303, whether the pressed key on the remote controller of the television is a first direction key or a second direction key is judged; if the first direction key is pressed down, step 304 is performed; and if the second direction key is pressed down, step 306 is performed.

In step 304, the first icon is moved to a position of an adjacent second icon in a direction corresponding to the first direction key.

In step 305, when the second icon is an indication of an application, a folder is created, and a first application corresponding to the first icon and a second application corresponding to the second icon are packed into the folder; or, when the second icon is an indication of a folder, the first application corresponding to the first icon is moved into the folder; and the process is ended.

In step 306, the first icon is moved to a position of an adjacent third icon in a direction corresponding to the second direction key.

In step 307, a third key on the remote controller of the television is detected to be pressed down, and when the third key is a confirmation key, a folder is created, the application corresponding to the first icon and an application corresponding to the third icon are packed into the folder, and the process is ended.

The present embodiment differs from the second embodiment in that: the third key is not a direction key but a confirmation key. In this instance, the first application and the adjacent application in a second direction (such as on an up side or a down side) may be controlled to be packed into a folder. The operation is convenient, and easiness of the operation is improved.

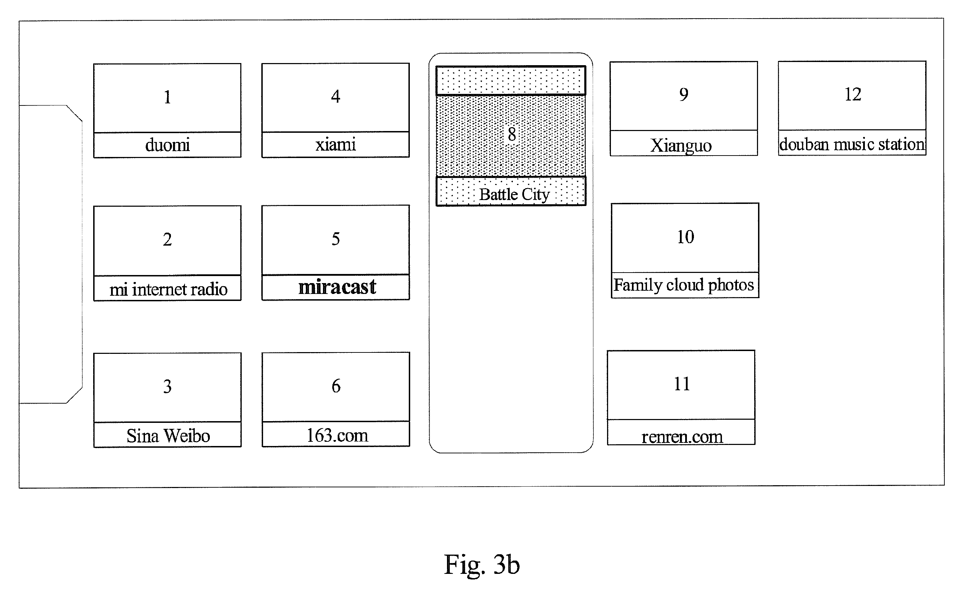

For example, referring to Fig. 3b, this is a block diagram showing an operation of packing television applications into a folder through an up key and a confirmation key. Referring to Fig. 2c (1) and Fig. 2c (2) firstly, an application 8 is detected to be selected, and after an application moving icon (not shown in the figures) displayed on the television screen is selected, an up key on the remote controller of the television is detected to be pressed down, the application 8 is moved upward to the position of the application 7 and is displayed as superimposed on the application 7. Then, a confirmation key on the remote controller of the television is further detected to be pressed down, and a folder is created and the application 8 and the application 7 are packed into the folder, the folder being arranged behind an application 6, as shown in Fig. 3b. Applications 9-12 in the back are respectively moved to corresponding positions.

In the present embodiment, the above method may further include:
after the folder is created, displaying the created folder in a size occupied by at least two icons.

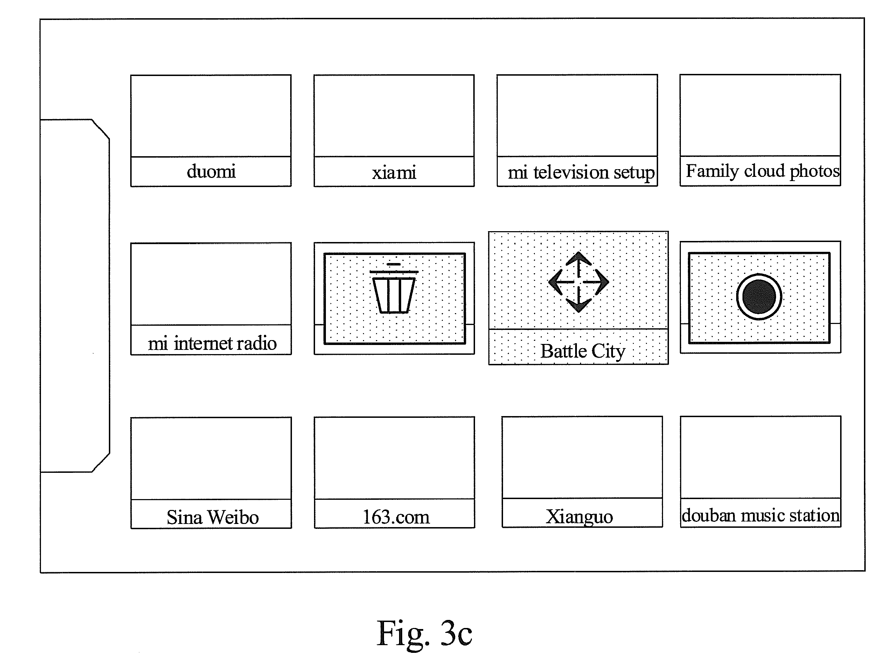

In the present embodiment, the application editing mode may be started by selecting a menu, and detailed descriptions thereof are omitted here. For the icons that are not shown in the above figures and are displayed on a television screen after the first application is selected, please refer to Fig. 3c. In the application editing mode, if the application 8 is selected, three operation types of icons are displayed on the television screen, including an application deleting icon, an application moving icon and an application entering icon from left to right, and thus an application deleting operation, an application moving operation and an application entering operation may be performed.

The above method provided by the present embodiment may be applied in a television.

In the above method provided by the present embodiment, by starting an application editing mode of a television, detecting whether a first icon displayed on the television is selected; when the first icon is selected, whether a designated key on a remote controller of the television is pressed down is detected; and when the designated key on the remote controller of the television is pressed down, the first icon is moved, or a first application corresponding to the first icon is added to a folder. Thus, operations on the television applications, such as moving or packing into a folder and the like, are implemented based on a remote controller of a television. Further, the key operations are simplified and the number of times for pressing keys is reduced, and thus easiness and flexibility of operations are improved and it is convenient for a user to operate.

### Fourth embodiment

The present embodiment provides a method for operating a television application, which may be applied in a television. The present embodiment is obtained by modification based on the second embodiment or the third embodiment, and further operations on the created folder are performed; it is not limited to realize creation of a folder through a left key or a right key or through an up key or a down key.

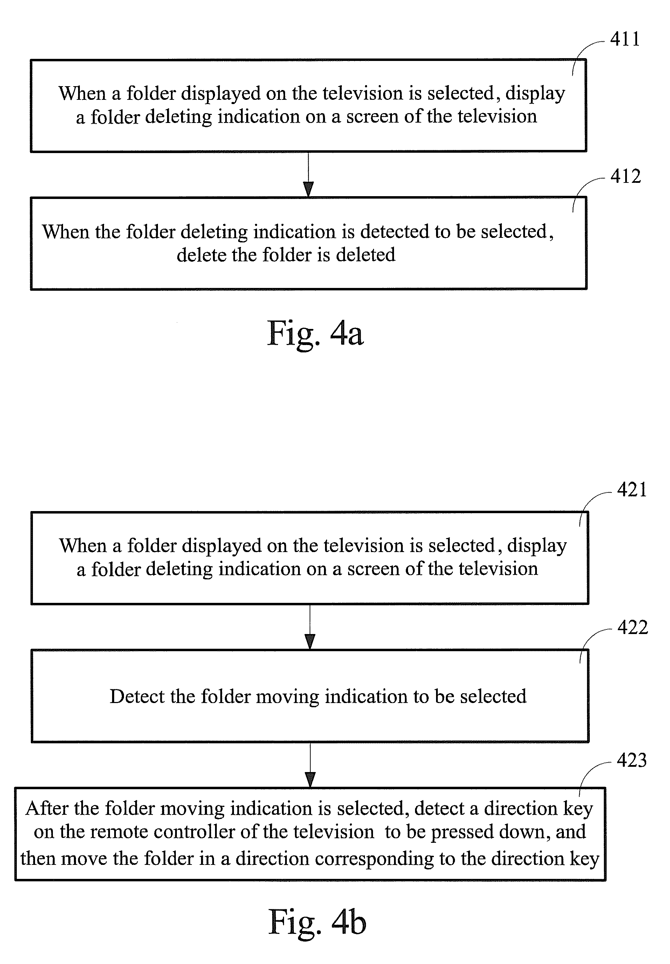

In a first instance, referring to Fig. 4a, in the method according to the second embodiment or the third embodiment, a deleting operation may be further performed on the created folder, and the following steps may be included.

In step 411, when a folder displayed on the television is selected, a folder deleting indication is displayed on a screen of the television.

The folder deleting indication may be a folder deleting icon, and the present embodiment does not impose specific limitations on this.

In step 412, when the folder deleting indication is detected to be selected, the folder is deleted, and the process is ended.

In the above first instance, a folder deleting operation may be easily performed by selecting a folder deleting indication. Thus, the operation is simple and it is convenient for a user to operate.

Or, in a second instance, referring to Fig. 4b, in the method according to the second embodiment or the third embodiment, a moving operation may be further performed on the created folder, and the following steps may be included.

In step 421, when a folder displayed on the television is selected, a folder moving indication is displayed on a screen of the television.

The folder moving indication may be a folder moving icon, and the present embodiment does not impose specific limitations on this.

In step 422, the folder moving indication is detected to be selected.

In step 423, after the folder moving indication is selected, a direction key on the remote controller of the television is detected to be pressed down, and then the folder is moved in a direction corresponding to the direction key, and the process is ended.

In the above second instance, the folder may be easily controlled to be moved in any direction through a direction key. Thus, the operation is simple and it is convenient for a user to operate.

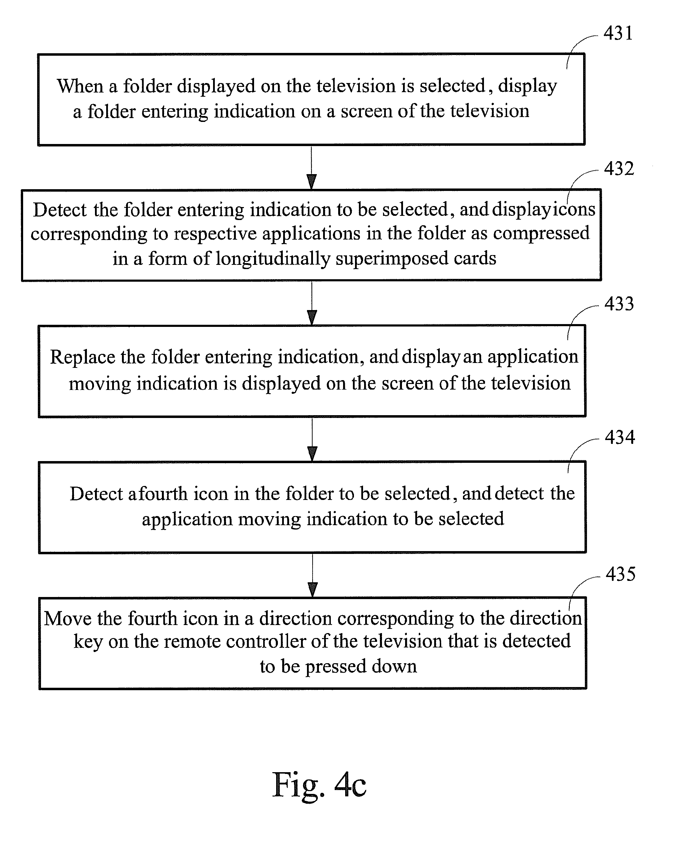

Or, in a third instance, referring to Fig. 4c, in the method according to the second embodiment or the third embodiment, a moving operation may be further performed on applications in a folder, and the following steps may be included.

In step 431, when a folder displayed on the television is selected, a folder entering indication is displayed on a screen of the television.

The folder entering indication may be a folder entering icon, and the present embodiment does not impose specific limitations on this.

In step 432, the folder entering indication is detected to be selected, and icons corresponding to respective applications in the folder are displayed as compressed in a form of longitudinally superimposed cards.

In step 433, the folder entering indication is replaced, and an application moving indication is displayed on the screen of the television.

In step 434, a fourth icon in the folder is detected to be selected, and the application moving indication is detected to be selected.

In step 435, the fourth icon is moved in a direction corresponding to the direction key on the remote controller of the television that is detected to be pressed down, and the process is ended.

Moving the fourth icon in a direction corresponding to the direction key on the remote controller of the television that is detected to be pressed down, may include:

a left key or a right key on the remote controller of the television is detected to be pressed down, the fourth icon is moved to the left or to the right to go out of the folder; or, an up key or a down key on the remote controller of the television is detected to be pressed down, the fourth icon is moved up or moved down in the folder.

In the above third instance, after a user selects an application in a folder, an operation of moving the selected application out of the folder may be easily implemented through the left key or the right key, and an operation of moving the application in the folder may be easily implemented through the up key or the down key. Thus, the operation is simple and it is convenient for a user to operate.

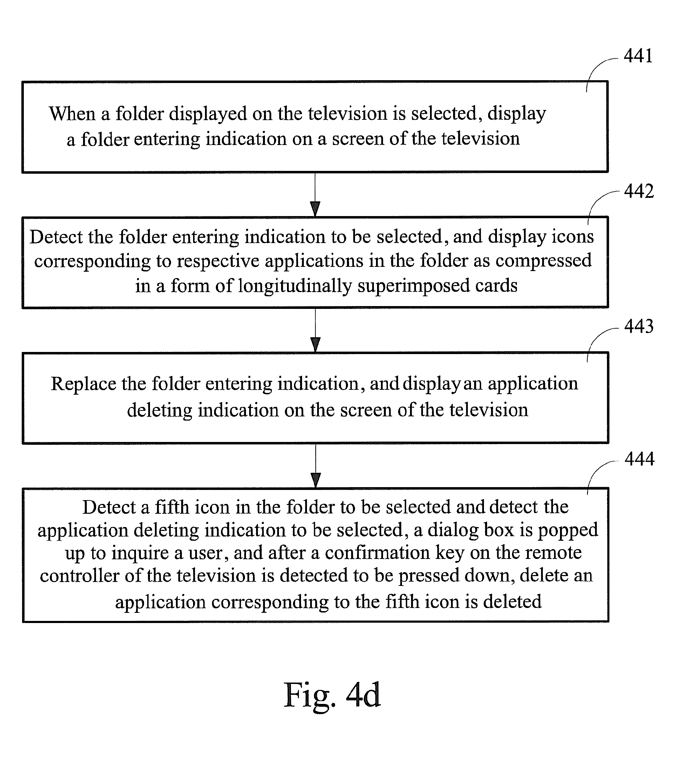

Or, in a fourth instance, referring to Fig. 4d, in the method according to the second embodiment or the third embodiment, a deleting operation may be further performed on applications in a folder, and the following steps may be included.

In step 441, when a folder displayed on the television is selected, a folder entering indication is displayed on a screen of the television.

The folder entering indication may be a folder entering icon, and the present embodiment does not impose specific limitations on this.

In step 442, the folder entering indication is detected to be selected, and icons corresponding to respective applications in the folder are displayed as compressed in a form of longitudinally superimposed cards.

In step 443, the folder entering indication is replaced, and an application deleting indication is displayed on the screen of the television.

In step 444, a fifth icon in the folder is detected to be selected and the application deleting indication is detected to be selected, a dialog box is popped up to inquire a user whether to perform an operation of deleting an application, and after a confirmation key on the remote controller of the television is detected to be pressed down, an application corresponding to the fifth icon is deleted; and the process is ended.

In the above fourth instance, after a user selects an application in a folder, deleting the application in the folder may be easily implemented by selecting the application deleting indication. Thus, the operation is simple and it is convenient for a user to operate.

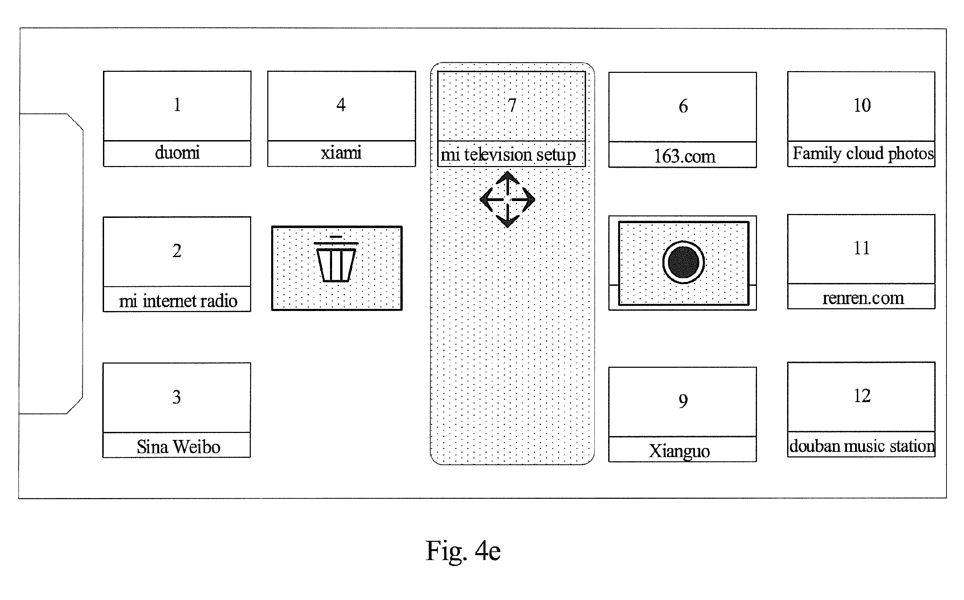

In order to better explain the operation with respect to a folder, more intuitive and concrete descriptions will be given in conjunction with the accompany drawings. Referring to Fig. 4e, this figure is a block diagram showing various indications displayed on the television screen after a folder is created, including a folder entering indication, a folder moving indication and a folder deleting indication. There are total of twelve applications on the television screen, including applications 1-12, and the applications 7and 5 are packed into one folder. When the folder is selected, a folder moving indication is displayed on the folder, a folder deleting indication is displayed on the left side of the folder, and a folder entering indication is displayed on the right side of the folder. Thus, a user may select a desired indication and thereby perform a corresponding operation.

### Fifth embodiment

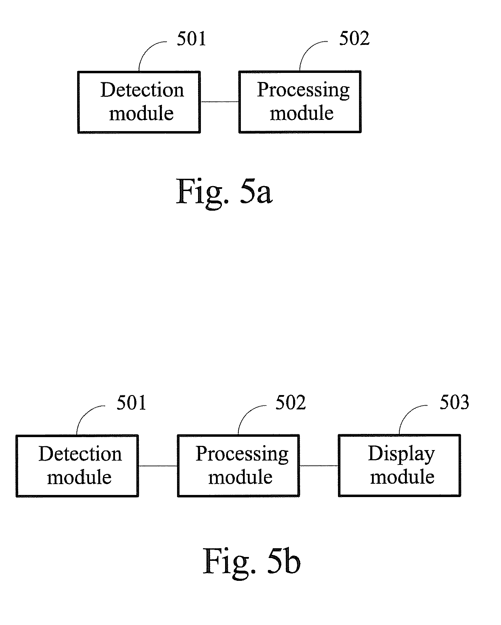

Referring to Fig. 5a, the present embodiment provides an apparatus for operating a television application. The apparatus includes:

a detection module 501 configured to start an application editing mode of a television, and to detect whether a first icon displayed on the television is selected, and when the first icon is selected, to detect whether a designated key on a remote controller of the television is pressed down; and

a processing module 502 configured to, when the designated key on the remote controller of the television is pressed down, move the first icon, or add a first application corresponding to the first icon to a folder.

The processing module 502 may include:
a first processing sub module configured to, when a designated first key on the remote controller of the television is pressed down, move the first icon to a position of an adjacent second icon, when the second icon is an indication of an application, pack the first application corresponding to the first icon and a second application corresponding to the second icon into a folder, and when the second icon is an indication of an folder, move the first application corresponding to the first icon into the folder; and
a second processing sub module configured to, when a designated second key on the remote controller of the television is pressed down, move the first icon to a position of an adjacent third icon, and after a designated third key on the remote controller of the television is detected to be pressed down, exchange a position of the first icon and the position of the third icon or pack the first application corresponding to the first icon and a third application corresponding to the third icon into a folder.

The first processing sub module may include:
a first packing unit configured to, when a designated first direction key on the remote controller of the television is pressed down, move the first icon to the position of the adjacent second icon in a direction corresponding to the first direction key, create a folder, and pack the first application corresponding to the first icon and the second application corresponding to the second icon into the folder.

The second processing sub module may include:
a first moving unit configured to, when a designated second direction key on the remote controller of the television is pressed down, move the first icon to the position of the adjacent third icon in a direction corresponding to the second direction key.

The second processing sub module may include:
an exchange unit configured to, when the third key is the second direction key, exchange the position of the first icon and the position of the third icon.

The second processing sub module may include:
a second packing unit configured to, when the third key is a confirmation key, create a folder, and pack the first application corresponding to the first icon and the third application corresponding to the third icon into the folder.

Referring to Fig. 5b, the above apparatus may further include:
a display module 503 configured to, after the folder is created, display the created folder in a size occupied by at least two icons.

The display module is further configured to: when a folder displayed on the television is selected, display a folder deleting indication on a screen of the television.

The processing module further includes:
a third processing sub module configured to, when the folder deleting indication is detected to be selected, delete the folder.

The display module is further configured to: when a folder displayed on the television is selected, display a folder moving indication on a screen of the television.

The processing module further includes:
a fourth processing sub module configured to, when the folder moving indication is detected to be selected and a direction key on the remote controller of the television is detected to be pressed down, move the folder in a direction corresponding to the direction key.

The display module is further configured to: when a folder displayed on the television is selected , display a folder entering indication on a screen of the television.

The processing module further includes:
a fifth processing sub module configured to detect that the folder entering indication is selected.

The display module is further configured to display icons corresponding to respective applications in the folder as compressed in a form of longitudinally superimposed cards.

The display module is further configured to: replace the folder entering indication, and display an application moving indication on a screen of the television.

The fifth processing sub module includes:
a second moving unit configured to, after a fourth icon in the folder is detected to be selected and the application moving indication is detected to be selected, move the fourth icon in a direction corresponding to a direction key on the remote controller of the television that is detected to be pressed down.

The display module is further configured to replace the folder entering indication, and display an application deleting indication on a screen of the television.

The fifth processing sub module includes:
a deleting unit configured to, after a fifth icon in the folder is detected to be selected and the application deleting indication is detected to be selected, pop up a dialog box to inquire a user whether to perform an operation of deleting an application, and delete an application corresponding to the fifth icon after a confirmation key on the remote controller of the television is detected to be pressed down.

The above apparatus provided by the present embodiment may be applied in a television.

In the above apparatus provided by the present embodiment, by starting an application editing mode of a television, whether a first icon displayed on the television is selected is detected; when the first icon is selected, whether a designated press key on a remote controller of the television is pressed down is detected; and when the designated key on the remote controller of the television is pressed down, the first icon is moved, or a first application corresponding to the first icon is added to a folder. Thus, operations on the television applications, such as moving or packing into a folder and the like, are implemented based on a remote controller of a television. Further, the key operations are simplified and the number of times for pressing keys is reduced, and thus easiness and flexibility of operations are improved and it is convenient for a user to operate.

### Sixth embodiment

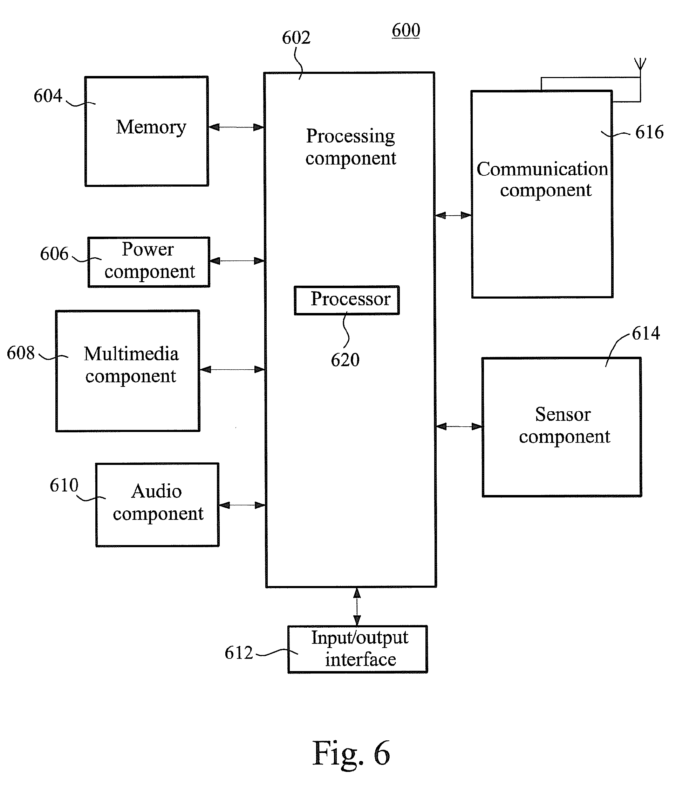

Fig. 6 is a block diagram showing a device for operating a television application according to an exemplary embodiment. For example, the device 600 may be a smart television.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

The present embodiment provides a nonvolatile readable storage medium, in which one or more programs are stored. When being applied in a device, the one or more programs may cause the device to execute instructions for performing the following steps:
starting an application editing mode of a television, and detecting whether a first icon displayed on the television is selected;
when the first icon is selected, detecting whether a designated key on a remote controller of the television is pressed down; and
when the designated key on the remote controller of the television is pressed down, moving the first icon, or adding a first application corresponding to the first icon into a folder.

When the designated key on the remote controller of the television is pressed down, moving the first icon, or adding a first application corresponding to the first icon into a folder, includes:
when a designated first key on the remote controller of the television is pressed down, moving the first icon to a position of an adjacent second icon, when the second icon is an indication of an application, packing the first application corresponding to the first icon and a second application corresponding to the second icon into a folder, and when the second icon is an indication of an folder, moving the first application corresponding to the first icon into the folder; and
when a designated second key on the remote controller of the television is pressed down, moving the first icon to a position of an adjacent third icon, and after a designated third key on the remote controller of the television is detected to be pressed down, exchanging a position of the first icon and the position of the third icon or packing the first application corresponding to the first icon and a third application corresponding to the third icon into a folder.

When a designated first key on the remote controller of the television is pressed down, moving the first icon to a position of an adjacent second icon, and when the second icon is an indication of an application, packing the first application corresponding to the first icon and a second application corresponding to the second icon into a folder, includes:
when a designated first direction key on the remote controller of the television is pressed down, moving the first icon to the position of the adjacent second icon in a direction corresponding to the first direction key, creating a folder, and packing the first application corresponding to the first icon and the second application corresponding to the second icon into the folder.

When a designated second key on the remote controller of the television is pressed down, moving the first icon to a position of an adjacent third icon, includes:
when a designated second direction key on the remote controller of the television is pressed down, moving the first icon to the position of the adjacent third icon in a direction corresponding to the second direction key.

Exchanging a position of the first icon and the position of the third icon, includes:
when the third key is the second direction key, exchanging the position of the first icon and the position of the third icon.

Packing the first application corresponding to the first icon and a third application corresponding to the third icon into a folder, includes:
when the third key is a confirmation key, creating a folder, and packing the first application corresponding to the first icon and the third application corresponding to the third icon into the folder.

The device may further execute instructions for perform the following steps:
after the folder is created, displaying the created folder in a size occupied by at least two icons.

The device may further execute instructions for perform the following steps:
when a folder displayed on the television is selected, displaying a folder deleting indication on a screen of the television; and
when the folder deleting indication is detected to be selected, deleting the folder.

The device may further execute instructions for perform the following steps:
when a folder displayed on the television is selected, displaying a folder moving indication on a screen of the television; and
when the folder moving indication is detected to be selected and a direction key on the remote controller of the television is detected to be pressed down, moving the folder in a direction corresponding to the direction key.

The device may further execute instructions for perform the following steps:
when a folder displayed on the television is selected, displaying a folder entering indication on a screen of the television; and
when the folder entering indication is detected to be selected, displaying icons corresponding to respective applications in the folder as compressed in a form of longitudinally superimposed cards.

After displaying icons corresponding to respective applications in the folder as compressed in a form of longitudinally superimposed cards, the method further includes:
replacing the folder entering indication, and displaying an application moving indication on a screen of the television; and
after a fourth icon in the folder is detected to be selected and the application moving indication is detected to be selected, moving the fourth icon in a direction corresponding to a direction key on the remote controller of the television that is detected to be pressed down.

After displaying icons corresponding to respective applications in the folder as compressed in a form of longitudinally superimposed cards, the method further includes:
replacing the folder entering indication, and displaying an application deleting indication on a screen of the television; and
after a fifth icon in the folder is detected to be selected and the application deleting indication is detected to be selected, popping up a dialog box to inquire a user whether to perform an operation of deleting an application, and deleting an application corresponding to the fifth icon after a confirmation key on the remote controller of the television is detected to be pressed down.

In the above nonvolatile readable storage medium provided by the present embodiment, by starting an application editing mode of a television, whether a first icon displayed on the television is selected is detected; when the first icon is selected, whether a designated key on a remote controller of the television is pressed down is detected; and when the designated key on the remote controller of the television is pressed down, the first icon is moved, or a first application corresponding to the first icon is added to a folder. Thus, operations on the television applications, such as moving or packing into a folder and the like, are implemented based on a remote controller of a television. Further, the key operations are simplified and the number of times for pressing keys is reduced, and thus easiness and flexibility of operations are improved and it is convenient for a user to operate.

It should be understood by those skilled in the art that, all or part of the steps of the above embodiments may be implemented through hardware, or through a program that instructs a related hardware. The program may be stored on a nonvolatile readable storage medium which may be read-only memory, magnetic or optical disks.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

The foregoing are only preferred embodiments of the disclosure, and do not intend to limit the disclosure. Any variation, equivalent substitution and modification that fall within the spiritual and principle of the disclosure should be embraced by the protective scope of the disclosure.

## Claims

1. A method for operating a television application, **characterized in that**, the method comprises:
starting (101) an application editing mode of a television, and detecting whether a first icon displayed on the television is selected;
when the first icon is selected, detecting (102) whether a designated key on a remote controller of the television is pressed down; and
when the designated key on the remote controller of the television is pressed down, (103) moving the first icon, or adding a first application corresponding to the first icon into a folder.

2. The method of claim 1, **characterized in that**, when the designated key on the remote controller of the television is pressed down, the step of moving the first icon, or the step of adding a first application corresponding to the first icon into a folder, comprise (113):
when a designated first key on the remote controller of the television is pressed down, moving (204) the first icon to a position of an adjacent second icon, when the second icon is an indication of an application, packing (205) the first application corresponding to the first icon and a second application corresponding to the second icon into a folder, and when the second icon is an indication of an folder, moving the first application corresponding to the first icon into the folder; and
(114) when a designated second key on the remote controller of the television is pressed down, moving the first icon to a position of an adjacent third icon, and after a designated third key on the remote controller of the television is detected to be pressed down, exchanging a position of the first icon and the position of the third icon or packing the first application corresponding to the first icon and a third application corresponding to the third icon into a folder.

3. The method of claim 2, **characterized in that**, when a designated first key on the remote controller of the television is pressed down, the step of moving the first icon to a position of an adjacent second icon, and when the second icon is an indication of an application, the step of packing the first application corresponding to the first icon and a second application corresponding to the second icon into a folder, comprise:
when a designated first direction key on the remote controller of the television is pressed down, moving (204) the first icon to the position of the adjacent second icon in a direction corresponding to the first direction key, creating a folder, and packing the first application corresponding to the first icon and the second application corresponding to the second icon into the folder.

4. The method of claim 2, **characterized in that**, when a designated second key on the remote controller of the television is pressed down, the step of moving the first icon to a position of an adjacent third icon, comprises:
when a designated second direction key on the remote controller of the television is pressed down, moving (206) the first icon to the position of the adjacent third icon in a direction corresponding to the second direction key.

5. The method of claim 4, **characterized in that**, the step of exchanging a position of the first icon and the position of the third icon, comprises:
when the third key is the second direction key, exchanging (207) the position of the first icon and the position of the third icon.

6. The method of claim 4, **characterized in that**, the step of packing the first application corresponding to the first icon and a third application corresponding to the third icon into a folder, comprises:
when the third key is a confirmation key (307), creating a folder, and packing the first application corresponding to the first icon and the third application corresponding to the third icon into the folder.

7. The method of claim 3 or 6, **characterized in that**, the method further comprises:
after the folder is created, displaying the created folder in a size occupied by at least two icons.

8. The method of claim 7, **characterized in that**, the method further comprises:
when a folder displayed on the television is selected, displaying a folder deleting indication on a screen of the television (411) ; and
when the folder deleting indication is detected to be selected, deleting the folder (412).

9. The method of claim 7, **characterized in that**, the method further comprises:
when a folder displayed on the television is selected, displaying a folder moving indication on a screen of the television (421); and
when the folder moving indication is detected to be selected (422) and a direction key on the remote controller of the television is detected to be pressed down, moving the folder in a direction corresponding to the direction key (423).

10. The method of claim 7, **characterized in that**, the method further comprises:
when a folder displayed on the television is selected, displaying a folder entering indication on a screen of the television (431); and
when the folder entering indication is detected to be selected, displaying icons corresponding to respective applications in the folder as compressed in a form of longitudinally superimposed cards (432).

11. The method of claim 10, **characterized in that**, after displaying icons corresponding to respective applications in the folder as compressed in a form of longitudinally superimposed cards, the method further comprises:
replacing the folder entering indication, and displaying an application moving indication on the screen of the television (433); and
after a fourth icon in the folder is detected to be selected (434) and the application moving indication is detected to be selected, moving the fourth icon in a direction corresponding to a direction key on the remote controller of the television that is detected to be pressed down (435).

12. The method of claim 10, **characterized in that**, after displaying icons corresponding to respective applications in the folder as compressed in a form of longitudinally superimposed cards, the method further comprises:
replacing the folder entering indication, and displaying an application deleting indication on the screen of the television; and
after a fifth icon in the folder is detected to be selected (444) and the application deleting indication is detected to be selected, popping up a dialog box to inquire a user whether to perform an operation of deleting an application, and deleting an application corresponding to the fifth icon after a confirmation key on the remote controller of the television is detected to be pressed down.

13. An apparatus for operating a television application, **characterized in that**, the apparatus comprises:
a detection module (501) configured to start an application editing mode of a television, and to detect whether a first icon displayed on the television is selected, and when the first icon is selected, to detect whether a designated key on a remote controller of the television is pressed down; and
a processing module (502) configured to, when the designated key on the remote controller of the television is pressed down, move the first icon, or add a first application corresponding to the first icon to a folder.

14. A computer program including instructions for executing the steps of a method for operating a television application according to any one of claims 1 to 12 when said program is executed by a computer.

15. A recording medium readable by a computer and having recorded thereon a computer program including instructions for executing the steps of a method for operating a television application according to any one of claims 1 to 12..
